# EUROPÄISCHE PATENTANMELDUNG

(11) **EP 2 275 694 A1**
(43) Veröffentlichungstag der Anmeldung: **19.01.2011**
(21) Anmeldenummer: 10401077.2
(22) Anmeldetag: 09.06.2010
(51) Int. Cl.: F16B 37/04

(54) **Befestigungseinrichtung zu einer Schraubbefestigung an einer Montageschiene**

(30) Priorität: 27.06.2009 DE 102009030768
(71) Anmelder: fischerwerke GmbH & Co. KG, 72178 Waldachtal (DE)
(72) Erfinder: Linka, Martin, 72160 Horb a.N. (DE); Böhmel, Philipp, 70565 Stuttgart (DE)

(57) **Zusammenfassung**

Die Erfindung betrifft eine Befestigungseinrichtung (1) zu einer Schraubbefestigung an einer Montageschiene (2), die eine Befestigungsmutter (6) und einen Mutterhalter (7) mit einem rohrförmigen Schaft (13) aufweist, in dem quer und seitlich überstehend die Befestigungsmutter (6) aufgenommen ist. Zur Erzielung eines großen axialen Federwegs schlägt die Erfindung vor, Federbögen (16) am Schaft (13) vorzusehen, die die Befestigungsmutter (6) nach oben in Richtung eines Deckflanschs (14) des Mutterhalters (7) drücken.

## Beschreibung

Die Erfindung betrifft eine Befestigungseinrichtung zu einer Schraubbefestigung an einer Montageschiene mit den Merkmalen des Oberbegriffs des Anspruchs 1.

Montageschienen sind bekannt. Sie werden an Decken, auch abgehängt, oder Wänden befestigt und dienen zur Befestigung von beispielsweise Rohren und Kabeln. Üblicherweise haben Montageschienen einen quadratischen oder rechteckigen Querschnitt und eine normalerweise durchgehende Längsöffnung. Zur Befestigung an der Montageschiene wird eine in Draufsicht meist rechteckige Befestigungsmutter in Längsrichtung ausgerichtet durch die Längsöffnung in die Montageschiene eingesetzt, die nicht breiter, aber länger als die Längsöffnung der Montageschiene breit ist, allerdings nicht länger als eine Innenbreite der Montageschiene. Durch Drehung um 90°, evtl. auch weniger, wird die Befestigungsmutter in der Montageschiene quer- oder schräggestellt und hintergreift die Montageschiene seitlich ihrer Längsöffnung. Die Befestigungsmutter kann auch von einem Ende in die Montageschiene eingeschoben werden, sie kann in diesem Fall auch breiter als die Längsöffnung der Montageschiene sein. Solche Befestigungsmuttern werden auch als Hammerkopfmuttern oder, nicht ganz zutreffend, als Nutensteine oder Kulissensteine bezeichnet. Wesentlich für die Erfindung ist nicht die Form der Befestigungsmutter, sondern die Möglichkeit, sie in Hintergriff in einer Montageschiene bringen und eine Schraubbefestigung an ihr vornehmen zu können.

Eine Befestigungseinrichtung mit einer Befestigungsmutter ist bekannt aus dem Gebrauchsmuster DE 20 2007 011 093 U1. Das Befestigungselement weist einen Mutterhalter mit einem rohrförmigen Schaft auf, der einen Flansch an einem Ende und eine ihn quer durchsetzende Durchtrittsöffnung an einem anderen Ende aufweist. Ein Umriss der Durchtrittsöffnung ist kongruent zu einem Querschnitt der Befestigungsmutter, die Durchtrittsöffnung bildet eine Mutteraufnahme, die die Befestigungsmutter quer zum Schaft und parallel zum Flansch am anderen Ende des Schafts hält. Eine der Befestigungsmutter zugewandte Fläche des Flanschs, die hier als Unterseite bezeichnet wird, bildet eine Auflage, die seitlich neben der Längsöffnung außen auf der Montageschiene aufliegt, wenn die Befestigungseinrichtung wie vorgesehen an der Montageschiene befestigt ist.

Ein Abstand der Befestigungsmutter von der Auflage des Mutterhalters ist so gewählt, dass die Befestigungseinrichtung klemmend an der Montageschiene hält, wenn sie an der Montageschiene montiert ist. Die Befestigungseinrichtung ist dadurch gegen Verschieben gesichert, beispielsweise auch dann, wenn die Montageschiene vertikal befestigt ist. Die Klemmkraft ist so gering, dass sich die Befestigungseinrichtung von Hand verschieben lässt. Der Abstand der Befestigungsmutter von der Auflage des Mutterhalters muss auf die Montageschiene abgestimmt sein. Nockenförmige Erhöhungen auf der Auflage des bekannten Mutterhalters erhöhen die Klemmkraft.

Aufgabe der Erfindung ist, einen Klemmbereich einer Befestigungseinrichtung der erläuterten Art zu vergrößern.

Diese Aufgabe wird erfindungsgemäß durch die Merkmale des Anspruchs 1 gelöst. Der Mutterhalter der erfindungsgemäßen Befestigungseinrichtung weist einen in Richtung der Auflage gewölbten Federbogen auf, der elastisch federnd gegen eine Unterseite der Befestigungsmutter drückt, wenn sich diese in der Mutteraufnahme des Mutterhalters befindet. Der Mutterhalter kann auch mehr als einen Federbogen aufweisen. Mit "Unterseite" ist die der Auflage des Mutterhalters abgewandte Fläche der Befestigungsmutter gemeint. Der Federbogen drückt mit Vorspannung gegen die Befestigungsmutter und hält sie klemmend in der Mutteraufnahme des Mutterhalters. Der Federbogen ermöglicht durch elastisches Federn eine Vergrößerung des Abstands der Befestigungsmutter von der Auflage des Mutterhalters, wodurch sich ein Wanddickenbereich der Montageschiene, in dem die Befestigungseinrichtung klemmt, vergrößert. Bei Montageschienen, die nach innen abgekantete Stege entlang Seitenrändern ihrer Längsöffnung aufweisen, vergrößert sich ein Höhenbereich der Stege, an dem die Befestigungseinrichtung klemmt. Die erfindungsgemäße Befestigungseinrichtung ist weniger stark an eine bestimmte Montageschiene gebunden, sondern passt sich besser an Montageschienen mit unterschiedlichen Wanddicken oder unterschiedlich hohen Stegen an Rändern der Längsöffnung an.

Eine Ausgestaltung der Erfindung sieht eine Schiebesicherung für die Befestigungsmutter in der Mutteraufnahme des Mutterhalters vor, die beispielsweise eine Nase in der Mutteraufnahme des Mutterhalters aufweist, die in eine komplementäre Vertiefung der Befestigungsmutter einschnappt, wenn die Befestigungsmutter in die Mutteraufnahme eingebracht wird. Es kann auch umgekehrt die Nase an der Befestigungsmutter und die Vertiefung in der Mutteraufnahme vorgesehen sein. Die Schiebesicherung sichert die Befestigungsmutter in der Mutteraufnahme des Mutterhalters.

Eine Weiterbildung sieht vor, die Schiebesicherung auf einer Ober- oder einer Unterseite der Befestigungsmutter anzuordnen. Die Oberseite ist die der Auflage des Mutterhalters zugewandte Seite der Befestigungsmutter, die Unterseite die der Auflage des Mutterhalters abgewandte Seite der Befestigungsmutter. Der Federbogen drückt gegen die Unterseite der Befestigungsmutter und drückt die Befestigungsmutter mit ihrer Oberseite gegen die Mutteraufnahme des Mutterhalters. Durch die Anordnung der Schiebesicherung auf der Ober- oder Unterseite der Befestigungsmutter hält der Federbogen die Schiebesicherung in Eingriff.

Eine Ausgestaltung der Erfindung sieht Einführschrägen der Befestigungsmutter vor. Hierbei handelt es sich um Flächen, die so angeordnet und ausgebildet sind, dass sie beim Einsetzen der Befestigungseinrichtung in die Montageschiene und beim Drehen zum Inhintergriffbringen die Montageschiene seitlich ihrer Längsöffnung unter- bzw. hintergreifen und die Befestigungsmutter in einer Art Schraubbewegung in Hintergriff bringen. Die Einführschrägen erleichtern oder ermöglichen das Drehen der Befestigungseinrichtung beim Einsetzen in die Montageschiene, so dass die Befestigungsmutter in Hintergriff in der Montageschiene gelangt. Die Einführschrägen müssen keine ebenen Flächen sein.

Eine Ausgestaltung der Erfindung sieht vor, dass die Auflage des Mutterhalters Auflaufschrägen aufweist. Sie bewirken, dass die Auflage in einer Art Schraubbewegung auf die Außenseite der Montageschiene gelangt, wenn die Befestigungseinrichtung gedreht wird, um die Befestigungsmutter in Hintergriff in der Montageschiene zu bringen. Die Auflaufschrägen heben die Auflage des Mutterhalters sozusagen auf die Außenfläche der Montageschiene an, wenn die Befestigungseinrichtung gedreht wird, um die Befestigungsmutter in Hintergriff in der Montageschiene zu bringen. Die Auflaufschrägen müssen nicht eben sein. Die Auflaufschrägen können unabhängig von anderen Merkmalen, insbesondere von dem gewölbten Federbogen an der Befestigungseinrichtung, vorgesehen sein, sie setzen den Federbogen nicht voraus. Eine Ausgestaltung der Erfindung sieht Klemmelemente vor, die von der Auflage des Mutterhalters abstehen. Die Klemmelemente können beispielsweise massive oder hohle, federnde Erhöhungen sein. Die Klemmelemente verbessern die Klemmung und vergrößern den Klemmbereich der Befestigungseinrichtung an einer Montageschiene.

Anstelle der Befestigungsmutter sieht eine Ausgestaltung der Erfindung eine Hammerkopfschraube vor, die eine Schraubbefestigung durch Aufschrauben einer Mutter anstatt durch Einschrauben einer Schraube oder eines Gewindebolzens ermöglicht.

Die Erfindung wird nachfolgend anhand eines in der Zeichnung dargestellten Ausführungsbeispiels näher erläutert. Es zeigen:

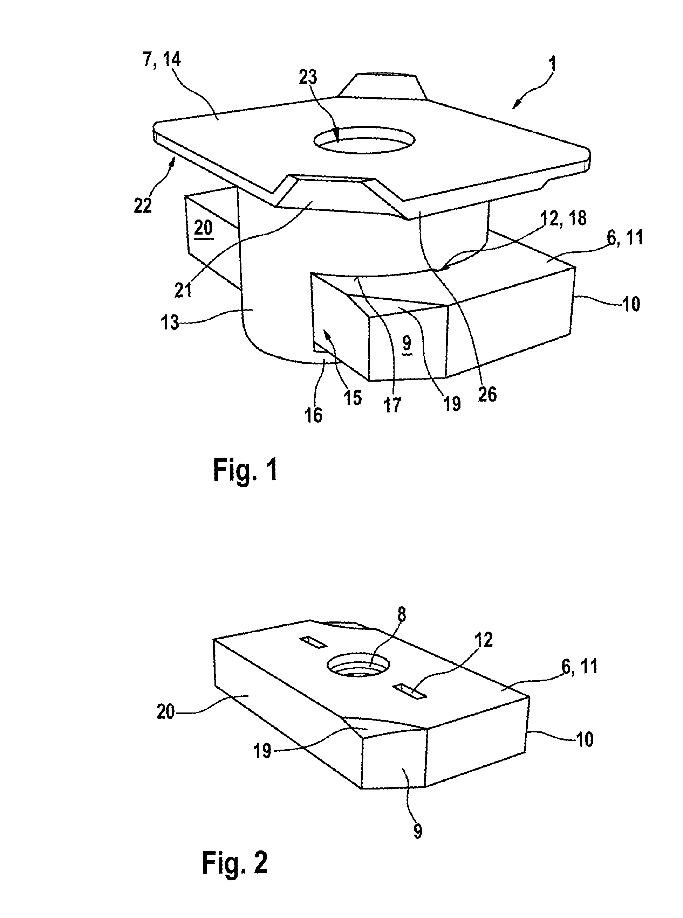

- Figur 1: eine erfindungsgemäße Befestigungseinrichtung in perspektivischer Darstellung;
- Figur 2: eine Befestigungsmutter der Befestigungseinrichtung aus Figur 1 in perspektivischer Darstellung;
- Figur 3: eine Seitenansicht eines Mutterhalters der Befestigungseinrichtung aus Figur 1;
- Figur 4: die Befestigungseinrichtung aus Figur 1 in einer Figur 3 entsprechenden Seitenansicht;

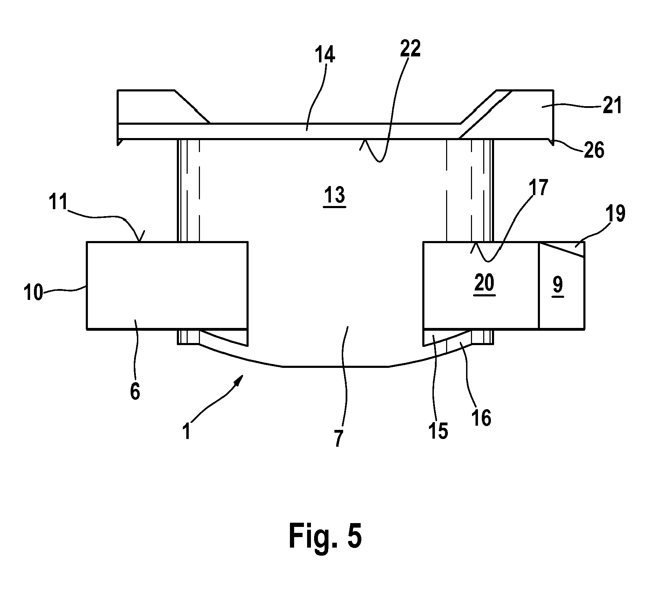

- Figur 5: die Befestigungseinrichtung aus Figur 1 in einer gegenüber Figur 4 um 90° gedrehten Ansicht; und
- Figur 6: die Befestigungseinrichtung aus Figur 1 in einer Figur 5 entsprechenden Ansicht, eingesetzt in eine Montageschiene.

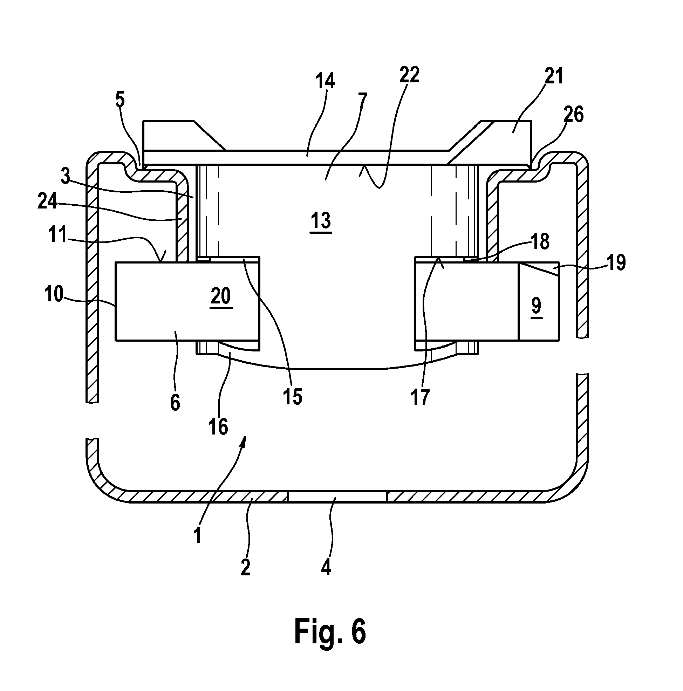

Die in der Zeichnung dargestellte, erfindungsgemäße Befestigungseinrichtung 1 ist zu einer Schraubbefestigung an einer Montageschiene 2 vorgesehen, wie sie im Querschnitt in Figur 6 zu sehen ist. Die Montageschiene 2 ist beispielsweise aus Blech abgekantet oder durch Strangziehen oder -pressen hergestellt. Sie ist hohl und weist einen quadratischen oder rechteckigen Querschnitt auf. Eine Seite der Montageschiene 2 weist eine durchgehende Längsöffnung 3 auf, die gegenüberliegende Seite ist mit Löchern 4, die mit Abstand voneinander in einer Längsmitte angebracht sind, versehen, um die Montageschiene 2 an beispielsweise einer Wand oder Decke, auch abgehängt, befestigen zu können. Seitlich der Längsöffnung 3 weist die Montageschiene 2 eine in Längsrichtung durchgehende Vertiefung 5 auf, die ungefähr so tief ist wie eine Wanddicke der Montageschiene 2. Die Montageschiene 2 weist auf beiden Seiten der Längsöffnung 3 zueinander parallele, nach innen gerichtete Stege 24 auf. Die Stege 24 gehen in Längsrichtung der Montageschiene 2 durch und begrenzen die Längsöffnung 3 seitlich.

Die Befestigungseinrichtung 1 ist im Ausführungsbeispiel zweiteilig, sie weist eine Befestigungsmutter 6 und einen Mutterhalter 7 auf. Der Mutterhalter 7 besteht aus Kunststoff, die Befestigungsmutter 6 aus Stahl oder Leichtmetall; die Materialwahl ist nicht zwingend für die Erfindung.

Die Befestigungsmutter 6 ist rechteckig, sie weist ein Mittelloch 8 mit Innengewinde auf und es sind zwei einander diametral gegenüberliegende Ecken abgeschrägt, sie weisen Abschrägungen 9 auf. Die Befestigungsmutter 6 ist schmaler und länger als die Längsöffnung 3 der Montageschiene 2 breit ist, und die Befestigungsmutter 6 ist kürzer als eine Innenbreite der Montageschiene 2. Die Befestigungsmutter 6 lässt sich längs zur Montageschiene 2 ausgerichtet durch deren Längsöffnung 3 in die Montageschiene 2 einbringen und durch eine Drehung um 90° in der Montageschiene 2 querstellen, so dass sie die Montageschiene 2 seitlich der Längsöffnung 3 hintergreift. Die Abschrägungen 9 ermöglichen die Drehung der Befestigungsmutter 6 im Innern der Montageschiene 2. Eine Diagonale der nicht abgeschrägten Ecken 10 der Befestigungsmutter 6 ist länger als die Innenbreite der Montageschiene 2, so dass ein Drehwinkel der Befestigungsmutter 6 in der Montageschiene 2 auf ungefähr die genannten 90° begrenzt ist, um die Befestigungsmutter 6 in der Montageschiene 2 querstellen zu können. Auf einer hier als Oberseite 11 bezeichneten Flachseite weist die Befestigungsmutter 6 zwei Rastmulden 12 auf, die auf einer Längsmittellinie der Befestigungsmutter 6 angeordnet sind. Die Befestigungsmutter 6 kann auch als Nutenstein bezeichnet werden.

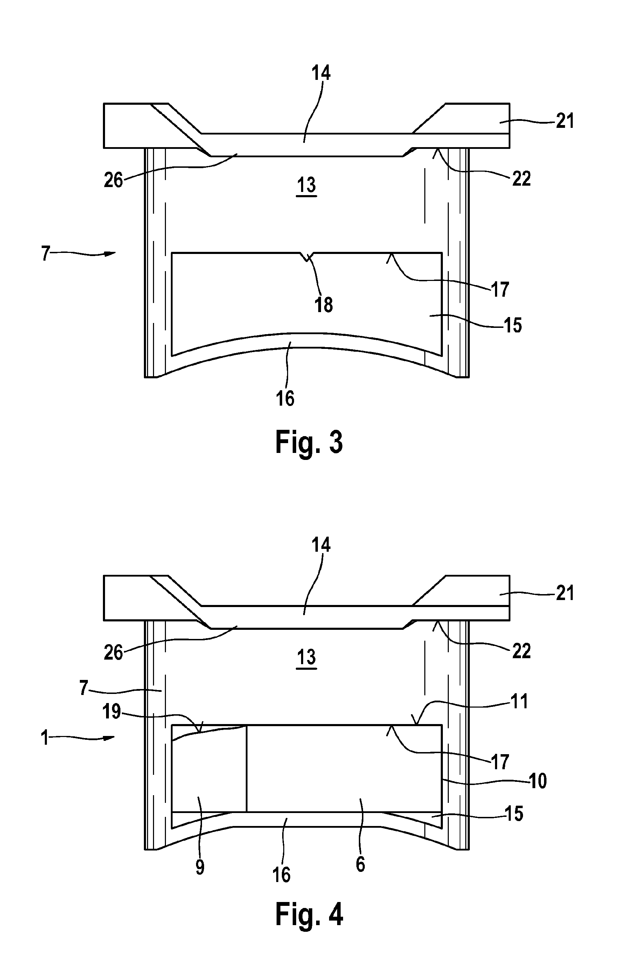

Der Mutterhalter 7 weist einen rohrförmigen Schaft 13 mit einem Deckflansch 14 an einem Ende auf. Ein Innendurchmesser des Schafts 13 ist etwas größer als die Befestigungsmutter 6 breit ist. Mit Abstand vom Deckflansch 14 nahe einem offenen Ende weist der rohrförmige Schaft 13 einander gegenüberliegend zwei Öffnungen auf, durch die bzw. in die die Befestigungsmutter 6 steckbar ist. Die Öffnungen bilden eine Mutteraufnahme 15, in der die Befestigungsmutter 6 quer zum Schaft 13 und parallel zum und mit Abstand vom Deckflansch 14 angeordnet ist. Die Befestigungsmutter 6 steht beidseitig nach außen über den Schaft 13 des Mutterhalters 7 vor. Die den Mutterhalter 15 bildenden Öffnungen im Schaft 13 des Mutterhalters 7 können als rechteckig, allerdings mit einer nach innen gewölbten Längsseite, beschrieben werden. An den Seiten sind die Öffnungen höher und in der Mitte niedriger als die Befestigungsmutter 6 dick ist. Die nach innen gewölbten Seiten der die Mutteraufnahme 15 bildenden Öffnungen werden von Federbögen 16 gebildet, die Wandabschnitte des rohrförmigen Schafts 13 des Mutterhalters 7 sind. Die Federbögen 16 verlaufen in Umfangsrichtung des Schafts 13 und sind, wie insbesondere in Figur 3 zu sehen, von der Seite gesehen nach oben, d.h. in Richtung des Deckflanschs 14 gewölbt. Die Federbögen 16 drücken elastisch federnd von unten gegen die Befestigungsmutter 6 und drücken die Befestigungsmutter 6 gegen obere Ränder 17 der die Mutteraufnahme 15 bildenden Öffnungen im Schaft 13. "Nach oben" bedeutet in Richtung des Deckflanschs 14. Die oberen Ränder 17 der Öffnungen weisen in ihrer Mitte eine Rastnase 18 auf, die in die Rastmulden 12 der Befestigungsmutter 6 einschnappen, wenn die Befestigungsmutter 6 in die die Mutteraufnahme 15 bildenden Öffnungen gesteckt wird. Die Rastnasen 18 und die Rastmulden 12 bilden eine Schiebesicherung 12, 18, die die Befestigungsmutter 6 verliersicher in der Aufnahme 15 des Mutterhalters 7 hält. Die Federbögen 16, die federnd von unten gegen die Befestigungsmutter 6 drücken, halten die Rastnasen 18 in Eingriff in den Rastmulden 12.

An den Ecken mit den Abschrägungen 9 weist eine Oberseite 11 der Befestigungsmutter 6 Einlaufschrägen 19 auf. Die Einlaufschrägen 19 sind in Draufsicht beispielsweise dreiecksförmig, sie fallen von der Höhe der Oberseite 11 der Befestigungsmutter 6 in Richtung zu Längsrändern 20 der Befestigungsmutter 6 ab. Im Ausführungsbeispiel sind die Einlaufschrägen 19 ebene Flächen, was allerdings nicht zwingend ist.

Der Deckflansch 14 hat in Draufsicht eine quadratische Form, wobei zwei einander diametral gegenüberliegende Ecken gerundet sind und die beiden anderen Ecken schräg nach oben außen stehen. "Nach oben" bedeutet von der Befestigungsmutter 6 weg gerichtet. Die schräg nach oben außen stehenden Ecken bilden Auflaufschrägen 21. Eine der Befestigungsmutter 6 zugewandte Unterseite des Deckflanschs 14 bildet außerhalb des rohrförmigen Schafts 13 eine Auflage 22.

Der Deckflansch 14 steht auch nach innen über den rohrförmigen Schaft 13 über, er weist ein Mittelloch 23 auf, dessen Durchmesser kleiner als ein Innendurchmesser des rohrförmigen Schafts 13 und etwas größer als ein Außendurchmesser des Innengewindes 8 der Befestigungsmutter 6 ist. Durch das Mittelloch 23 ist eine nicht dargestellte Schraube steckbar und in das Innengewinde 8 der Befestigungsmutter 6 einschraubbar, um einen nicht dargestellten Gegenstand an der Befestigungseinrichtung 1 befestigen zu können.

Von der Auflage 22, also von der Unterseite des Deckflanschs 14, stehen Klemmelemente 26 nach unten, d.h. in Richtung der Befestigungsmutter 6 ab. Die Klemmelemente 26 sind an zwei gegenüberliegenden Seiten des in Draufsicht quadratischen Deckflanschs 14 angeordnet, und zwar an den Seiten, an denen die Befestigungsmutter 6 seitlich aus dem Schaft 13 vorsteht. Im Ausführungsbeispiel haben die Klemmelemente 26 die Form im Querschnitt dreiecksförmiger Leisten; diese Form ist nicht zwingend für Klemmelemente 26.

Zur Montage der Befestigungseinrichtung 1 an bzw. in der Montageschiene 2 wird die Befestigungseinrichtung 1 so ausgerichtet, dass ihre Befestigungsmutter 6 in Längsrichtung zur Montageschiene 2 und deren Längsöffnung 3 ausgerichtet ist. Die Befestigungseinrichtung 1 lässt sich in dieser Ausrichtung durch die Längsöffnung 3 so einbringen, dass sich der rohrförmige Schaft 13 zwischen den Stegen 24 in der Längsöffnung 3 der Montageschiene 2 und die Befestigungsmutter 6 an Unterseiten der Stege 24 im Innern der Montageschiene 2 befindet. Der Deckflansch 14 befindet sich auf einer Außenseite der Montageschiene 2. Durch eine Drehung der Befestigungseinrichtung 1 um 90° wird die Befestigungsmutter 6 in der Montageschiene 2 quergestellt und hintergreift die Montageschiene 2 seitlich ihrer Längsöffnung 3 an den Stegen 24. Die 90°-Drehung, die die Befestigungsmutter 6 in Hintergriff bringt, kann auch als Verriegelung der Befestigungseinrichtung 1 an oder in der Montageschiene 2 bezeichnet werden.

Die Einlaufschrägen 19 fallen so tief unter die Oberseite 11 der Befestigungsmutter 6 ab, dass sie bei der 90°-Drehung der Befestigungseinrichtung 1 unter die Stege 24 der Montageschiene 2 gelangen. Bei der 90°-Drehung drücken die Einlaufschrägen 19 die Befestigungsmutter 6 an den Stegen 24 der Montageschiene 2 gegen die Kraft der Federbögen 16 ab, so dass die Befestigungsmutter 6 in einer Art Schraubbewegung unter die Stege 24 gelangt.

An sich entsprechend den Einlaufschrägen 19 drücken die Auflaufschrägen 21 an den beiden diametral gegenüberliegenden Ecken des Deckflanschs 14 den Deckflansch 14 bei der 90°-Drehung der Befestigungseinrichtung 1 nach oben, so dass der Deckflansch 14 auf der Außenseite der Montageschiene 2 bleibt. Die Auflaufschrägen 21 stehen so weit nach oben, dass sie die Außenseite der Montageschiene 2 seitlich der Längsöffnung 3 übergreifen. Am Ende der 90°-Drehung schnappt der Deckflansch 14 in die Vertiefung 5, die sich beiderseits der Längsöffnung 3 in Längsrichtung der Montageschiene 2 erstreckt. Das Einschnappen wird durch die Federkraft der Federbögen 16 bewirkt, die den Deckflansch 14 federnd in die Vertiefung 5 ziehen. Die die Auflage 22 bildende Unterseite des Deckflanschs 14 liegt mit den Klemmelementen 26 auf einem Grund der Vertiefung 5 auf. Der Deckflansch 14 ist ungefähr so dick wie die Vertiefung 5 tief ist, so dass der Deckflansch 14 in etwa bündig mit der Außenseite der Montageschiene 2 ist.

Die Federbögen 16 stellen einen verhältnismäßig großen Federweg zur Verfügung, so dass sich die Befestigungseinrichtung 1 an Montageschienen 2 mit unterschiedlich hohen Stegen 24 anpasst. Die Anpassung ist zwar begrenzt, aber trotzdem größer als bei bekannten, gattungsgemäßen Befestigungseinrichtungen. Der Federweg der Federbögen 16 ist auch so groß, dass er die Befestigungseinrichtung 1 klemmend an der Montageschiene 2 hält, obwohl der Mutterhalter 7 beim Einschnappen seines Deckflanschs 14 in die Vertiefung 5 der Montageschiene 2 um die Tiefe der Vertiefung 5 "nachgibt".

Wie bereits ausgeführt, kann durch Einschrauben einer nicht dargestellten Schraube oder eines Gewindebolzens in das Innengewinde 8 der Befestigungsmutter 6 ein nicht dargestellter Gegenstand an der Befestigungseinrichtung 1 und über diese an der Montageschiene 2 befestigt werden.

## Patentansprüche

1. Befestigungseinrichtung zu einer Schraubbefestigung an einer Montageschiene (2), mit einer Befestigungsmutter (6) und einem Mutterhalter (7), wobei der Mutterhalter (7) eine Auflage (22), die in montiertem Zustand seitlich einer Längsöffnung (3) der Montageschiene (2) außen auf der Montageschiene (2) aufliegt, und eine Mutteraufnahme (15) für die Befestigungsmutter (6), die die Befestigungsmutter (6) hält, aufweist, **dadurch gekennzeichnet, dass** der Mutterhalter (7) einen in Richtung der Auflage (22) gewölbten Federbogen (16) aufweist, der elastisch federnd gegen die Befestigungsmutter (6) drückt, wenn sich diese in der Mutteraufnahme (15) befindet.

2. Befestigungseinrichtung nach Anspruch 1, **dadurch gekennzeichnet, dass** die Befestigungsmutter (6) und der Mutterhalter (7) eine Schiebesicherung (12, 18) aufweisen, die beim Einbringen der Befestigungsmutter (6) in die Mutteraufnahme (15) einschnappt und die Befestigungsmutter (6) in der Mutteraufnahme (15) sichert.

3. Befestigungseinrichtung nach Anspruch 2, **dadurch gekennzeichnet, dass** die Schiebesicherung (12, 18) auf einer Ober- oder Unterseite (11) der Befestigungsmutter (6) angeordnet ist.

4. Befestigungseinrichtung nach Anspruch 1, **dadurch gekennzeichnet, dass** die Befestigungsmutter (6) Einlaufschrägen (19) aufweist.

5. Befestigungseinrichtung nach Anspruch 1, **dadurch gekennzeichnet, dass** die Auflage (22) des Mutterhalters (7) Auflaufschrägen (21) aufweist, die bei einem Drehen der Befestigungseinrichtung (1) zu einem Inhintergriffbringen der Befestigungsmutter (6) in der Montageschiene (2) die Montageschiene (2) seitlich ihrer Längsöffnung (3) übergreifen und bewirken, dass die Auflage (22) außen auf die Montageschiene (2) gelangt.

6. Befestigungseinrichtung nach Anspruch 1, **dadurch gekennzeichnet, dass** die Auflage (22) des Mutterhalters (7) Klemmelemente (26) auf einer der Befestigungsmutter (6) zugewandten Unterseite aufweist.

7. Befestigungseinrichtung nach Anspruch 1, **dadurch gekennzeichnet, dass** die Befestigungseinrichtung (1) eine Hammerkopfschraube anstelle der Befestigungsmutter (6) aufweist.
